# EUROPEAN PATENT SPECIFICATION

(11) **EP 1 905 535 B1**
(45) Date of publication and mention of the grant of the patent: **30.12.2009**
(21) Application number: 07019017.8
(22) Date of filing: 27.09.2007
(51) Int. Cl.: B23Q 3/155, B23Q 3/157

(54) **Tool warehouse in a numerical control machining centre and the like and tool changing process in such warehouse**
Werkzeuglager in einem numerisch gesteuerten Bearbeitungszentrum und dergleichen sowie Werkzeugwechselverfahren in einem solchen Lager
Magasin à outils dans un centre d'usinage à commande numérique et similaires et processus de changement d'outil dans un tel magasin

(30) Priority: 28.09.2006 IT TO20060692
(43) Date of publication of application: 02.04.2008
(73) Proprietor: Colombo Filippetti Torino S.r.l., 10040 Rivalta di Torino (TO) (IT)
(72) Inventor: Rizzardi, Renzo, 10092 Beinasco TO (IT)
(74) Representative: Aprà, Mario

(56) References cited:
- CH-A- 521 818
- DE-U1- 20 111 119
- JP-A- 6 246 572
- US-A- 3 412 459
- US-A- 3 818 580
- US-A- 4 670 965
- US-A- 6 042 524

## Description

The present invention relates to a tool warehouse in a numerical control machining centre and the like. The invention further relates to a tool changing process in such warehouse.

Each numerical control (N.C.) machining centre is integrated with a tool warehouse and with related automatic means for changing the tools equipped with at least two pincers, which at the same time pick up a tool on the spindle of the machining centre and a tool in the warehouse, extract the tools themselves, perform the exchange thereof and position them so exchanged in the warehouse and on the spindle of the machining centre, respectively.

According to the known art, a tool warehouse comprises a track having a channel-like continuous guide, for example two opposed rectilinear branches and two opposed semi-circular curves, joining said rectilinear branches. A plurality of tool-holding bushes is dragged along said track, by means of chain dragging means controlled by an electrically-operated geared motor as far as a change station, therethrough the chosen bush is overturned with the tool to be replaced and is subsequently re-positioned with the replaced tool.

Such dragging means does not allow to arrange the change station in any area of the track, in particular to arrange the station at a curve of the track, which represents a serious limitation in the possibility of using the warehouse.

Furthermore, such dragging means is structurally bulky and it does not allow a high constructive accuracy.

JP 06 246572 A discloses according to the introductory portion of claim 1 a tool warehouse, including a track wherein a plurality of tool-holding bushes is dragged, comprising a gear wheel, motor means, a plurality of tool-holding bushes and a change station, wherein a bush at a time is received in a corresponding cavity of said wheel.

Besides, th the known Automatic Tool Changers (ATC), the tool changing process in such tool-holding warehouse is usually carried out with the so-called "random" mode, wherein the arrangement of each tool in the warehouse is continuously varied, whereas the tool which is being used, when it is exchanged, positions in the place of the substitutive tool picked-up from the warehouse. This very quick management is valid when the maximum overall dimension (for example, the diameter) of all tools in the warehouse is smaller than (or at least substantially equal to) the pitch of the normalized tool-holding bushes of the warehouse and therefore it is possible to load the tools in all positions of the warehouse without any interference between the tools in the warehouse itself. However, if a tool has its overall dimensions larger than said normalized pitch, the drawback that the two tool-holders adjacent the one receiving such tool have to be left empty arises. Therefore, the management of these tools having their overall dimensions larger than the warehouse's pitch is a problem and two different solutions are known, according thereto:
- the tools are arranged in the warehouse by leaving for each tool the two adjacent empty places, thus alternating a full place after an empty place, thus halving the warehouse's capacity (for example, 10 tools out of a 20-place warehouse), by operating with the standard exchange cycle, or
- the exchange cycle is performed in two steps, which involves the cycle interruption and stopping the exchanger's engine to allow the warehouse rotation in order to look for a "fixed place" wherein the bulky tool can be placed. With this solution the exchange time increases considerably up to about 6 times the standard exchange time, thus at disadvantage of the processing time of the machine.

The present invention, starting as from knowing such drawbacks, wishes to find a remedy therefor.

An object of the invention is to provide a tool warehouse in a numerical control machining centre and the like allowing to manage the tools both in "random" mode, for the tools with overall dimensions smaller than (or at least equal to) the warehouse pitch, and in "fixed-place" mode, for the tools with larger overall dimensions, without being at disadvantage of the exchange time in any way.

An object of the invention is also to provide a tool changing process in a tool warehouse in a numerical control machining centre and the like allowing to manage the tools both in "random" mode, for the tools with diameter smaller than (or at least equal to) the warehouse pitch, and in "fixed-place" mode, for the tools with larger overall dimensions, without being at disadvantage of the exchange time in any way.

In view of such objects, the present invention provides a tool warehouse in a numerical control machining centre and the like, the main feature thereof forms the subject of the characterizing part of claim 1.

The tool changing process in the tool warehouse according to the invention is described in claim 25.

Additional advantageous features of the tool warehouse according to the invention are described in the depending claims.

The claims mentioned above are meant to be here wholly reported.

The present invention will result clearer from the following detailed description, by referring to the enclosed drawings provided by only way of example and not for limitative purpose, wherein:
- figure 1 is a front elevational view of the tool warehouse in numerical control machining centre and the like according to an exemplifying embodiment a tool warehouse not falling under the scope of the claims;
- figure 2 is a partial, detailed view, in larger scale, of an end of the tool warehouse according to figure 1;
- figure 3 is a partial, detailed view, in larger scale, of the other end of the tool warehouse according to figure 1, wherein a change station with single-place swivelling exchanger is provided in a curve for the so-called "random" management of the warehouse' s tools;
- figure 4 is a section view, in larger scale, according to the line A-A of figure 1;
- figure 5 is a section view, in larger scale, according to the line B-B of figure 1;
- figure 6 is a section view, in larger scale, according to the line C-C of figure 1;
- figure 7 is a view similar to the one of figure 3, but wherein - as variant - the change station provided at a rectilinear part of the track is illustrated;
- figure 8 is a view similar to the one of figure 3, but wherein - as variant - a change station with single-place slide exchanger is provided in a curve for the so-called "random" management of the warehouse's tools;
- figure 9 is a view in larger scale and a section view according to the line IX-IX of figure 8;
- figure 10 is a view similar to the one of figure 8, but wherein - as variant - the change station is provided at a rectilinear part of the track;
- figure 11 is a front elevational view of the tool warehouse according to the invention, wherein a change station with two-place swivelling exchanger is provided in a track curve, illustrated in a first operating position for managing also in "fixed-place" mode the tools with overall dimensions larger than the pitch of the warehouse;
- figure 12 is a section view, in larger scale, according to the line XII-XII of figure 11;
- figure 13 is a view similar to that of figure 12, but wherein the exchanger of said change station is swivelled in a different operating position;
- figure 14 is a view similar to that of figure 11, but wherein - a variant - the change station is provided at a rectilinear part of the track;
- figure 15 is a view similar to that of figure 11, but wherein - as variant - a change station comprising a two-place slide exchanger is illustrated, for managing the tools also in "fixed-place" mode;
- figure 16 is a section view, in larger scale, according to the line XVI-XVI of figure 15, showing the slide exchanger in a first operating position;
- figure 17 is a view similar to that of figure 16, but showing said exchanger in a second operating position;
- figure 18 is a partial view in direction of the arrow XVIII of figure 17;
- figure 19 is a view similar to that of figure 15, but wherein - as variant - the change station is provided at a rectilinear part of the track;
- figures 20.1 to 20.8 are front elevational schematic views of the tool warehouse according to the invention, illustrating the different steps of the process according to the invention for changing tools with the tool management both in "random" and in "fixed-place" mode;
- figure 21 is a front elevational, schematic view, and in different scale, of the tool warehouse in a numerical control machining centre and the like according to another embodiment of the present invention.

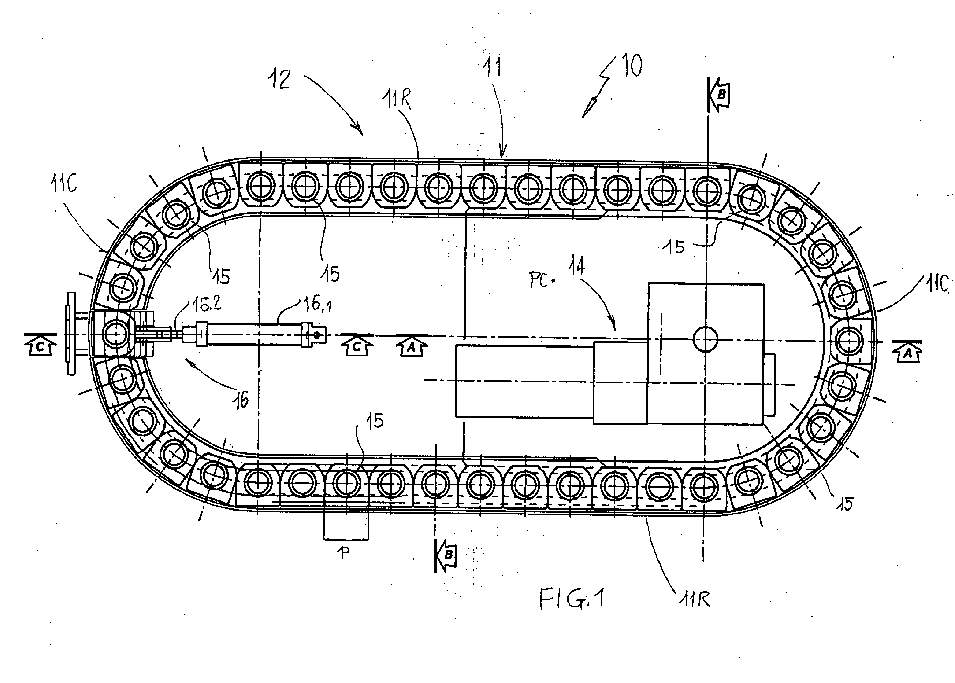

By firstly referring to figures 1 to 6 of the drawing, the tool warehouse in a numerical control machining centre and the like (the latter being not illustrated here), according to an exemplifying embodiment of a tool warehouse not falling under the scope of the claims, is designated as a whole with 10 (figure 1).

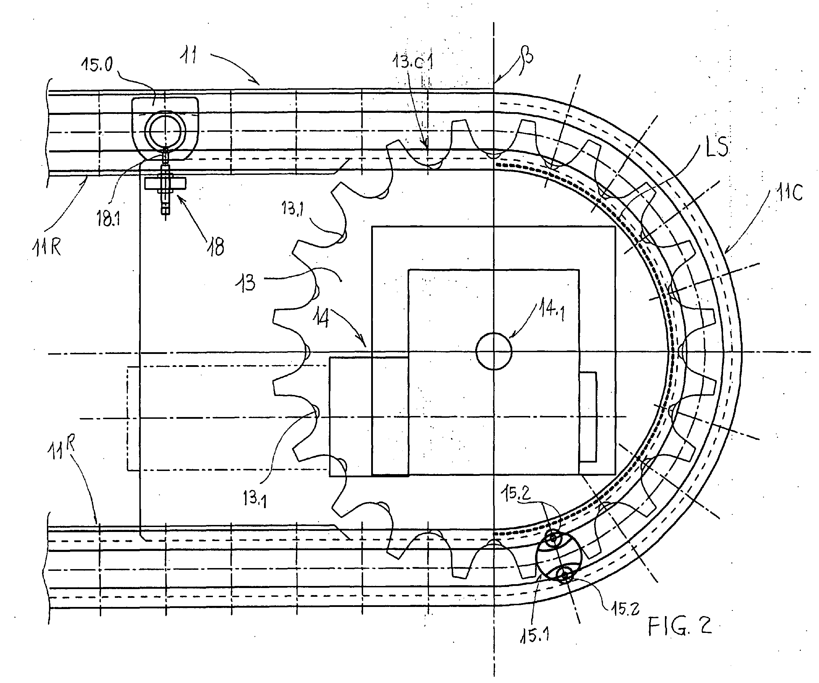

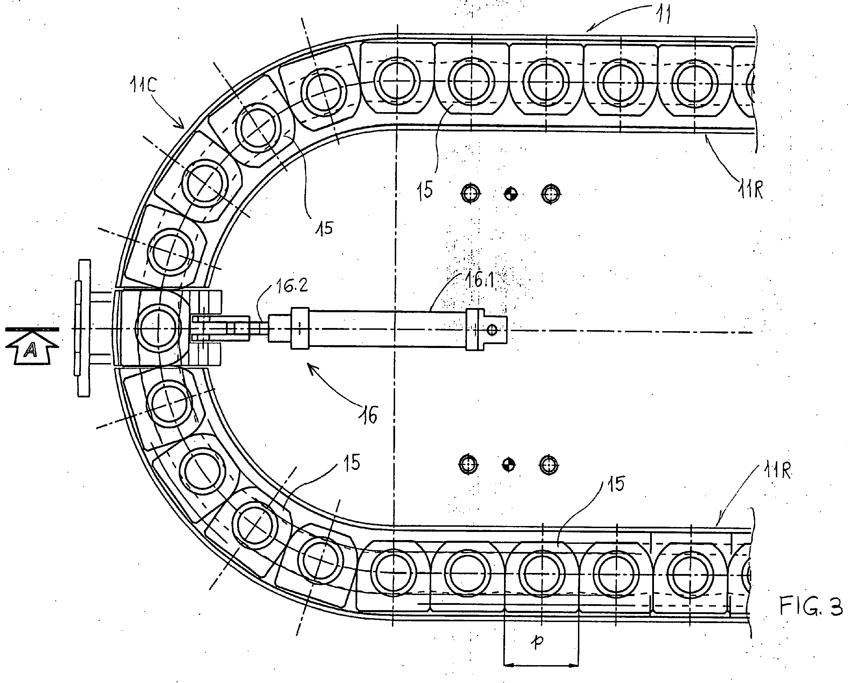

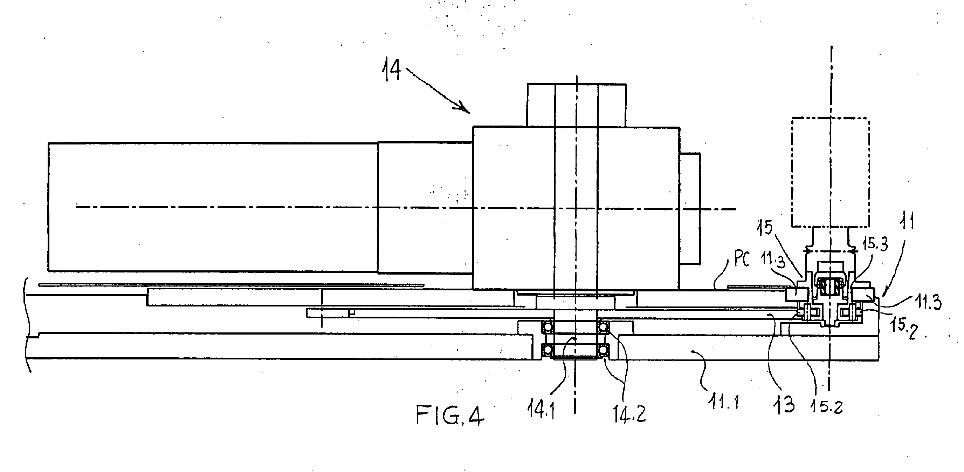

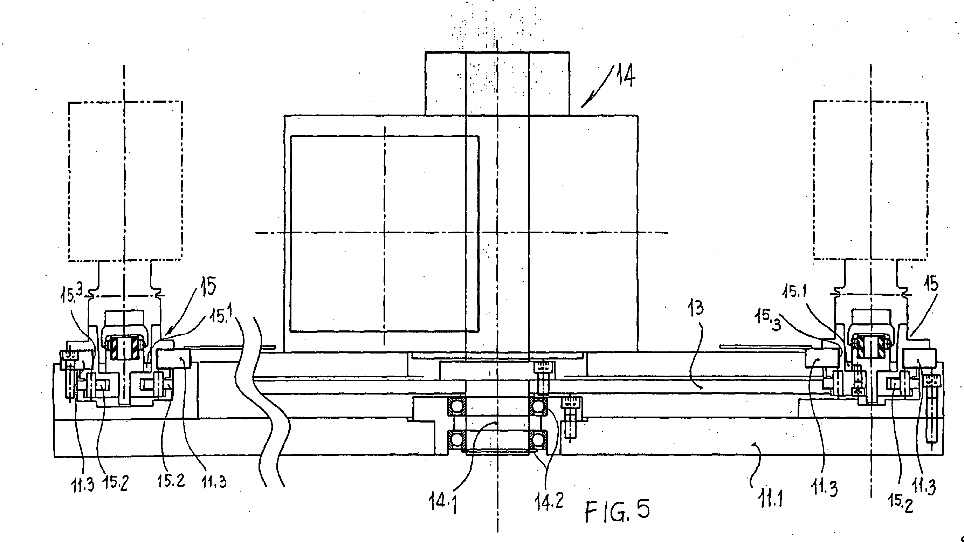

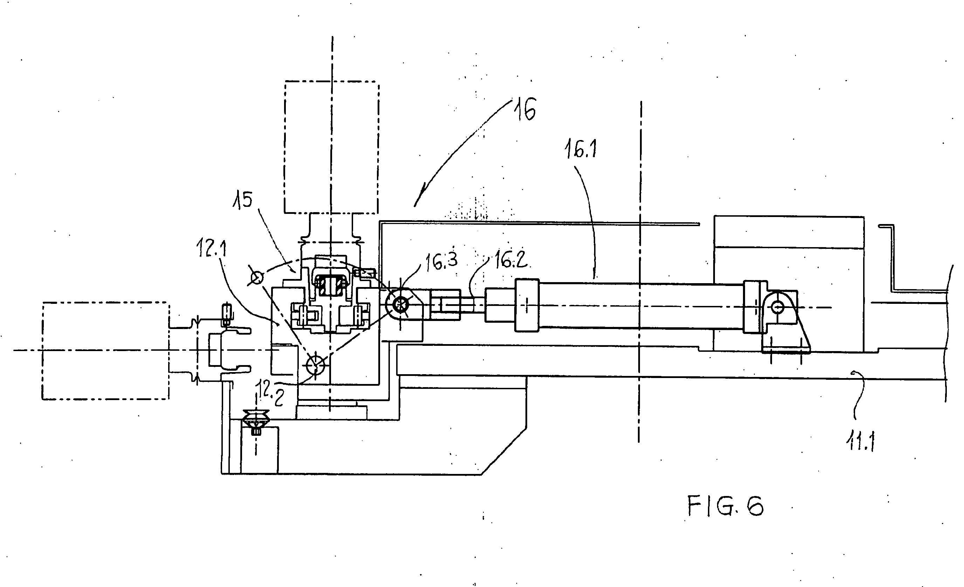

Said tool warehouse 10 mainly comprises:
- a closed-ring-like track 12 including, on a base plate 11. 1 (figures 4, 5, 6), a channel-like continuous guide 11, having two opposed, parallel and rectilinear branches 11R and two opposed and semi-circular curves 11C, joining said rectilinear branches 11R;
- a gear wheel 13 (figures 2, 4, 5), mainly coplanar and coaxial with respect to one of said semi-circular curves 11C of the track 12, so that substantially half of the toothing thereof extends in said same curve, spaced apart with respect to the outermost wall of the channel-like guide 11. [It will be noted that in the view of figure 2 said half-toothing of the wheel 13 is highlighted by means of a semi-circular line LS with thick parts, whereas a covering plate PC (figure 4) of said gear wheel 13 is removed for sake of explanation clarity];
- said electrically-operated geared motor means 14, which - when selectively driven - controls the rotation of said gear wheel 13. In figure 5 the coaxial, and integral in the rotation, assembly of the outlet shaft 14.1 of the geared motor 14 is illustrated, supported rotating with respect to the base plate 11.1 by means of bearings 14.2, and of said gear wheel 13;
- a plurality of identical tool-holding bushes 15, juxtaposed in said track 12 two by two in mutual contact and to fill-in the track 12 itself, each bush 15 having an axis substantially parallel to that of the gear wheel 13 and a seat like a truncated conical cup 15.1 (figure 5) opened outwards the channel-like guide 12, for engaging a respective tool. In figure 2, for sake of illustrative clarity, the bushes 15 are removed, except for a first bush, here designated with 15.0 and which will be better described hereinafter, and another bush, designated with 15.10, arranged at the gear wheel 13 and sectioned with a plane coplanar to the same wheel;
- at least a change station 16 (figures 3, 6) in said track 12, in the example provided in the centre of the curve 11C opposed to the one occupied by the gear wheel 13. A fixed actuator 16.1 for controlling the selective coming out and re-introduction of one of said bushes 15 one at a time is arranged at said change station 16, in a more internal area with respect to the track 12. Said actuator 16.1 is constituted by an hydraulic or pneumatic cylinder, articulated at one end to said base plate 11.1, the axis thereof is contained in the longitudinal vertical mid-plane of the track 12 (figure 1) and the stem thereof 16.2 is articulated to the free end thereof, by means of a pin 16.3, with respect to a track section 12.1, assembled swivelling with respect to the remaining portion of the track itself by means of a pin 12.2. Said articulation pin 16.3 of the stem 16.2 and said articulation pin 12.2 of the track section 12.1 have the axes thereof mainly orthogonal with respect to said longitudinal vertical mid-plane. Said track section 12.1 has the width at least equal to the pitch "p" mentioned above (width of a bush 15) and it is ideally obtained by sectioning the track 12 with two planes parallel to said longitudinal vertical mid-plane. In the rest position of said section 12.1 (that is, with the retracted stem of the actuator 16.1), the track 12 unwinds without solution of continuity also at said station 16.

The change station 16 described above comprises an exchanger (the field 12.1) swivelling for an angular amplitude substantially of ±90° and with a single place. It is suitable for the so-called "random" management of the tools of the warehouse according to the invention, as it will result clearer hereinafter.

As clearly illustrated by referring to the bush 15.10 in figure 2, the outer peripheral outline of each bush 15, at the plane wherein said gear wheel 13 lies, has a shape substantially complementary to the cavity between two adjacent teeth of the wheel itself, so that along the whole semi-circular curve 11C occupied by said wheel 13 each bush 15, housing in a cavity between the teeth of the wheel, is dragged integrally with the same.

It will be noted that, substantially in said plane, each bush 15 supports a pair of rollers 15.2, opposed therebetween and assembled idle onto respective axes parallel to the one of the bush itself. Said rollers 15.2 partially come out from the body of the bush 15 and rest onto the opposed walls of the channel-like track 12, so as to facilitate the sliding of the bushes themselves. Furthermore, said gear wheel 13 has a recess 13.1 (figure 2) at each cavity between pairs of adjacent teeth, in order to house therein the portion of one of said rollers 15.2 coming out from the outline of the bush 15 received in said same cavity, whereas the other roller 15.2 rolls against the outer wall of the track 12. Such arrangement guarantees the firm keeping of each bush 15 at the wheel 13.

### Operation

First of all, it will be noted that the whole working cycle is programmed and managed by means of PLC means (known on itself), constituting the logic of the machine.

The linear development of the track 12 substantially corresponds to a whole multiple of the width "p" (figures 1, 3) of each bush 15 (wherein, "p" is the warehouse pitch), so that the bushes 15 are juxtaposed side by side, as said, to fill-up the track itself.

Along the track 12 detecting means 18 (figure 2), for example proximity detecting means, is provided, whereas the bush alone 15.0 is equipped with a member 18.1 apt to be detected by said detecting means 18. Such arrangement allows to define precisely a position "0" or a starting position of the whole set of bushes 15 slidingly housed in the track 12. Thus, the position of each bush 15 is always univocally determined.

When, by means of the geared motor 14, the gear wheel 13 is moved into rotation (for example, clockwise in figure 2), the bush 15 which is at the cavity between the teeth 13.c1, which in the rotation direction immediately precedes the cross vertical plane (plane beta, figure 2) passing by the axis of the wheel itself, is received in said cavity 13.c1 itself and it remains therein, whereas it is dragged by the wheel 13 itself for the whole semicircumference LS along the curve 11C, therebeyond said bush 15 is released by the wheel 13 and it turns into the corresponding rectilinear part 11R of the track 12. Starting from this position, said bush 15 together with all other bushes outer of said curve 11C is moved along the remaining portion of the track 12 due to the push by the other bushes 15 which are brought by said wheel 13 to describe the corresponding curve 11C. Each bush 15, by means of an outer circumferential groove 15.3 (figures 4, 5), slidingly engages the opposed free edges 11. 3 (made of antifriction material) of the channel-like guide 11, whereas it is slidingly guided against the opposed walls of the guide itself by means of the two idle rollers thereof 15.2.

By means of this arrangement, the tool-holding bushes 15 are led to move all together along said track 12. The simultaneous motion of all the bushes 15 is stopped, by halting the gear wheel 13, when the bush chosen for the tool change is at the station 16. By extending the stem 16.2 of the actuator 16.1, the section 12.1 of the track 12 is rotated, for example, by 90° around the pin 12.2, by making it to overturn outwards the track 12, together with the chosen bush 15 stationing therein (figure 6). Such bush 15, overturned by 90° out of the track 12, is thus ready for the tool changing operation. Once performed the change, said bush 15 is brought back in the track 12, by inverse overturning, by retracting the stem 16.2 of the actuator 16.1.

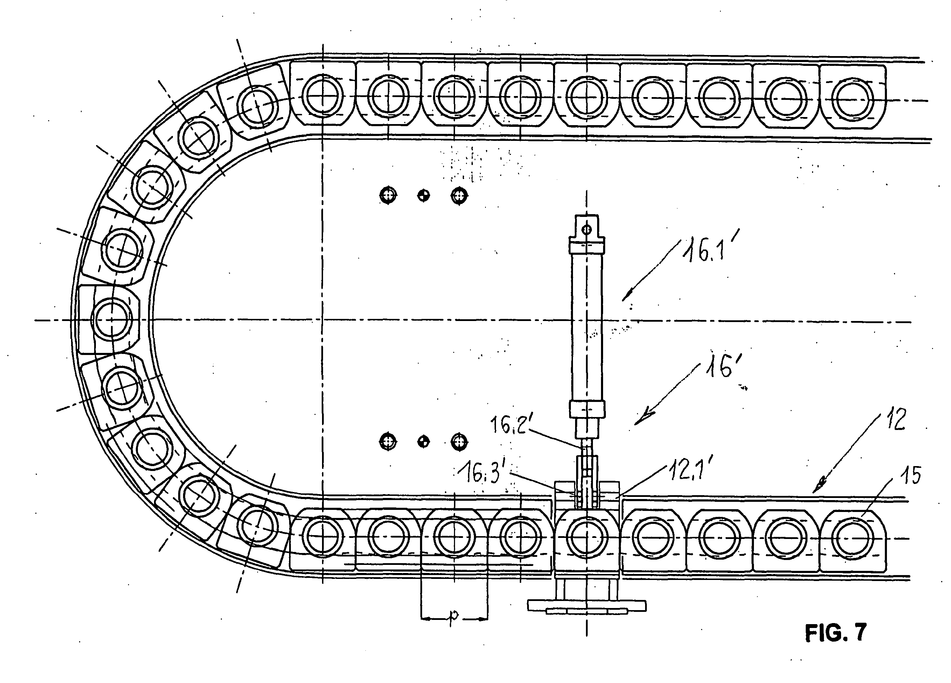

### Variant according to figure 7 (not falling under the scope of the claims)

The here described change station 16' comprises an exchanger (the field 12.1') swivelling for an angular amplitude substantially of ±90° and it has a single place. It is suitable for the so-called "random" management of the tools of the warehouse.

Said change station 16' is provided at a rectilinear part of said track 12. The structure and the operation of said station are the same of the ones of the above-described station 16.

In particular, a fixed actuator 16.1' identical to the actuator 16 for controlling the selective coming out of one of said bushes 15 at a time is arranged at said change station 16', in a more internal area with respect to the track 12. The axis thereof lies in a transversal vertical plane of the track 12. The stem 16.2' of said actuator is articulated to the free end thereof, by means of a pin 16.3', with respect to a track section 12.1' (identical to the section 12.1), assembled swivelling for an angle, for example, of ±90° with respect to the remaining portion of the track itself by means of a pin with axis parallel to the one of the pin 16. 3' (but not visible in said figure). For the other things, the description of the station 16 and of the operation thereof is referred to.

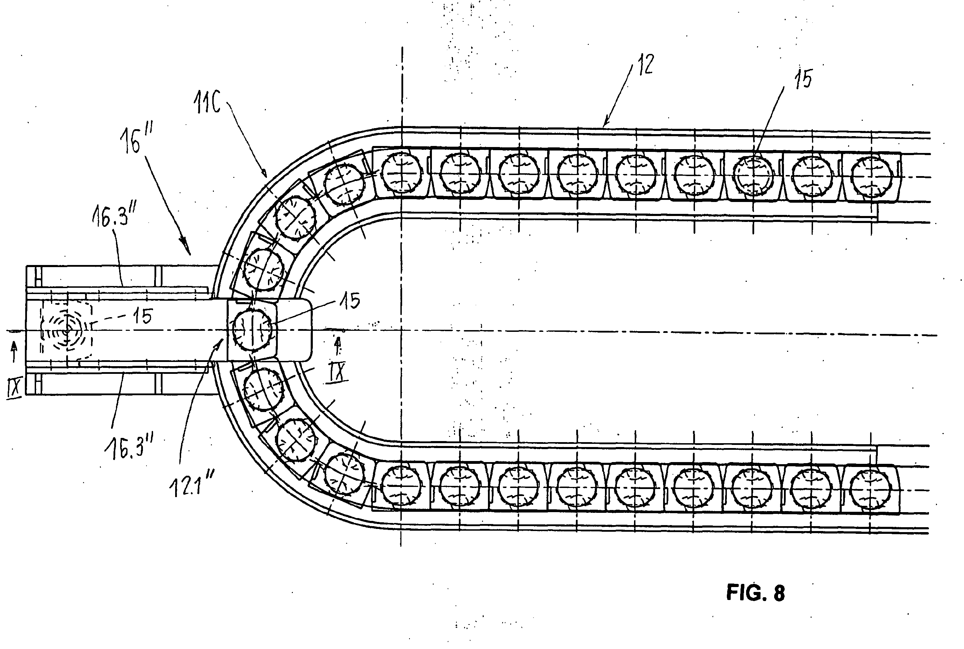

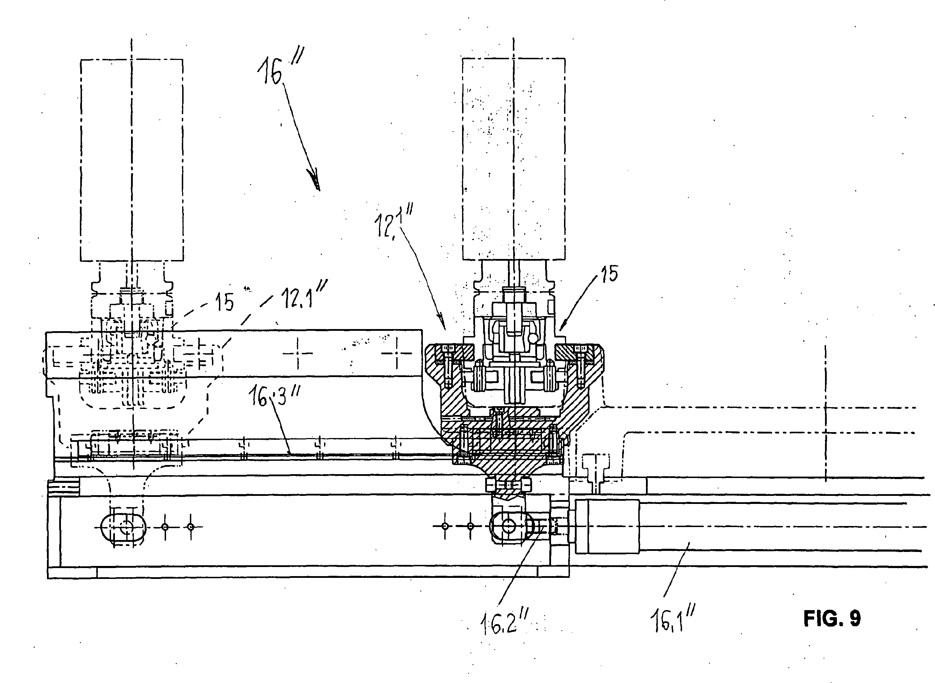

Variant according to figures 8 and 9 (not falling under the scope of the claims)

The here described change station 16" comprises an exchanger (the field 12.1") with linear translation, with reciprocating motion, in direction transversal to the track and with a single place. It is suitable, too, for the so-called "random" management of the tools of the warehouse.

Said change station 16" is provided in the centre of the curve 11C of the track 12 opposed to the one occupied by the gear wheel 13. A fixed actuator 16.1" for controlling the selective coming out of one of said bushes 15 at a time is provided at said change station 16". Said actuator 16.1" is constituted by an hydraulic or pneumatic cylinder, articulated at one end with respect to said base plate 11.1, the axis thereof is contained in the longitudinal vertical mid-plane of the track 12 and the stem thereof 16.2" is connected to the free end thereof with respect to a track section 12.1" (substantially identical to the section 12.1), assembled sliding along a pair of rectilinear prysmatic guides 16.3", parallel therebetween and with respect to said mid-plane and extended at and outside the track 12, substantially in the plane of said base plate 11.1 of the track itself. In said figures 8 and 9 a bush 15 is illustrated with dots and dashes, when it is brought out of the track by the actuator 16.1" along said guides 16.3" for performing the tool changing operation.

### Operation of the present variant

The simultaneous motion of all the bushes 15 is stopped, by halting the gear wheel 13, when the bush chosen for the tool change is at the station 16". By extending the stem 16.2" of the actuator 16.1", the section 12.1" of the track 12 is extracted from the track 12, by making it to slide outwards the track itself along the guides 16.3", together with the chosen bush 15 stationing therein. Such bush 15, brought out of the track 12 is thus ready for the tool change. Once performed the change, said bush 15, together with the replaced tool, is brought back in the track 12, by means of an inverse run, after the retraction of the stem 16.2" of the actuator 16.1".

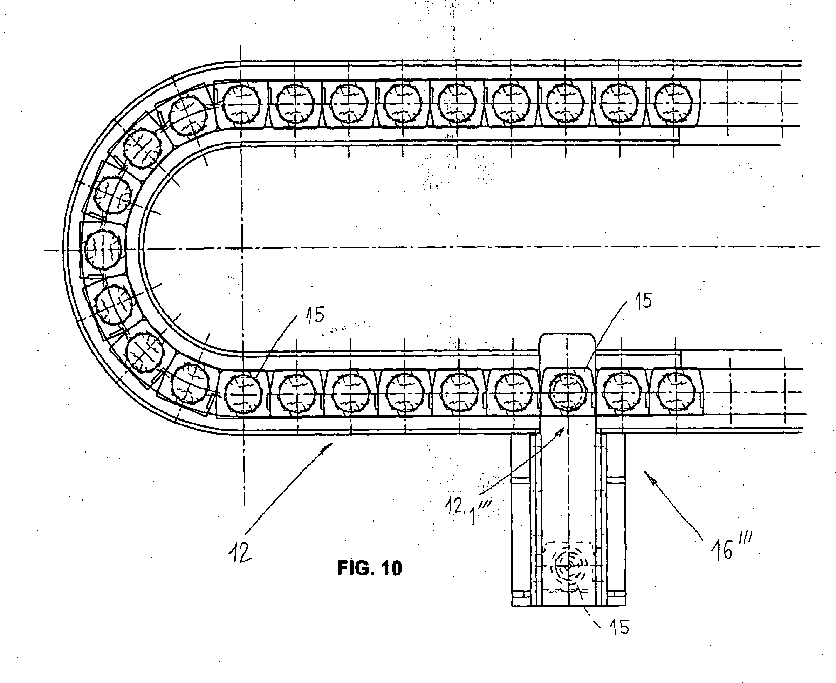

### Variant according to figure 10 (not falling under the scope of the claims)

The here described change station 16"' comprises an exchanger (the field 12.1"') with linear translation, with reciprocating motion, in direction transversal to the track and with a single place. It is suitable, too, for the so-called "random" management of the tools of the warehouse.

Said change station 16"' is provided in a rectilinear part of said track 12. The structure and the operation of said station are the same of the ones of the above-described station 16". The description given above of said change station 16" is then referred to.

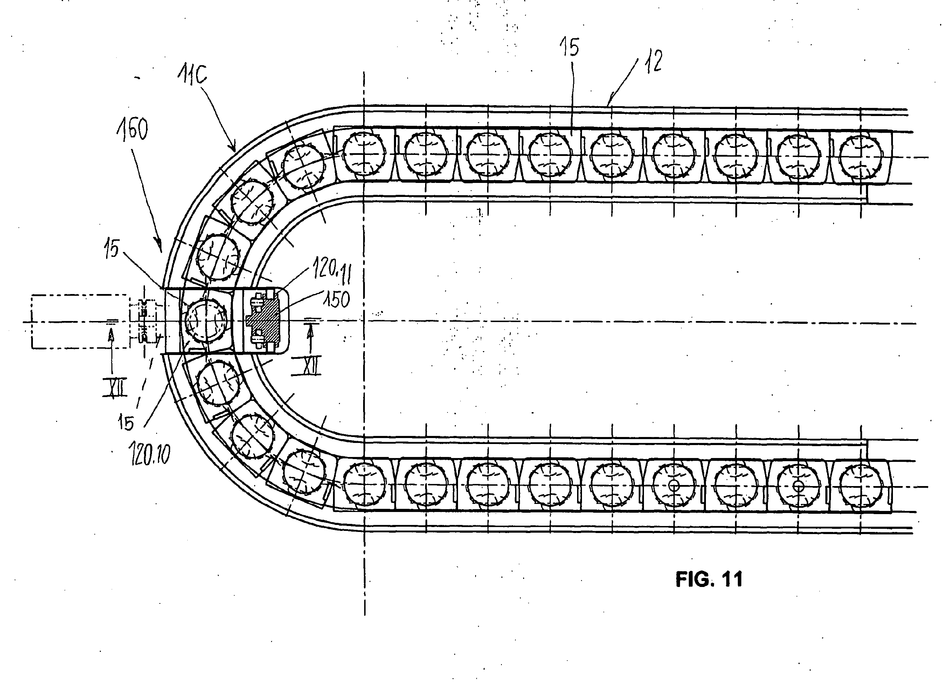

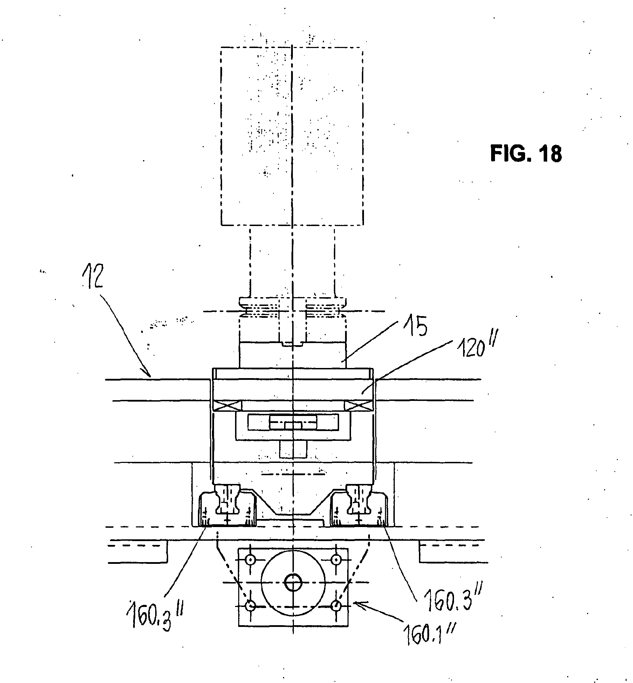

Now the description of the variants according to figures 11 to 19 follows, for performing the tool changing process with both "random" management, for the tools with diameter smaller than (or maximum equal to) the warehouse pitch, and "fixed-place" management for the tools with larger overall dimensions.

### Variant according to figures 11 to 13

The here described change station 160 comprises an exchanger (the body 120) swivelling for an angular amplitude substantially of ±90° and with a double place. It is suitable both for the so-called "random" management and for the "fixed-place" one of the tools of the warehouse according to the invention, as it will result hereinafter.

Said change station 160 in said track 12, in the example, is provided in the centre of the curve 11C opposed to the one occupied by the gear wheel 13. A fixed actuator 160.1 for controlling the selective coming out of one of said bushes 15 at a time is arranged at said change station 160, in a more internal area with respect to the track 12. Said actuator 160.1 is constituted by an hydraulic or pneumatic cylinder, articulated at one end to said base plate 11.1, the axis thereof is contained in the longitudinal vertical mid-plane of the track 12 and the stem thereof 160.2 is articulated to the free end thereof, by means of a pin 160.3, with respect to a parallelepiped body 120, which occupies a track part 12 with a width at least corresponding to said pitch "p" and it is assembled swivelling with respect to the remaining portion of the track itself by means of a pin 120.2, so as to arrange alternatively a first or a second one of two adjacent side faces (120.10, 120. 11) at the track itself. Said articulation pin 160.3 of the stem 160.2 and said articulation pin 120.2 of said parallelepiped body 120 have the axes thereof mainly orthogonal with respect to said longitudinal vertical mid-plane.

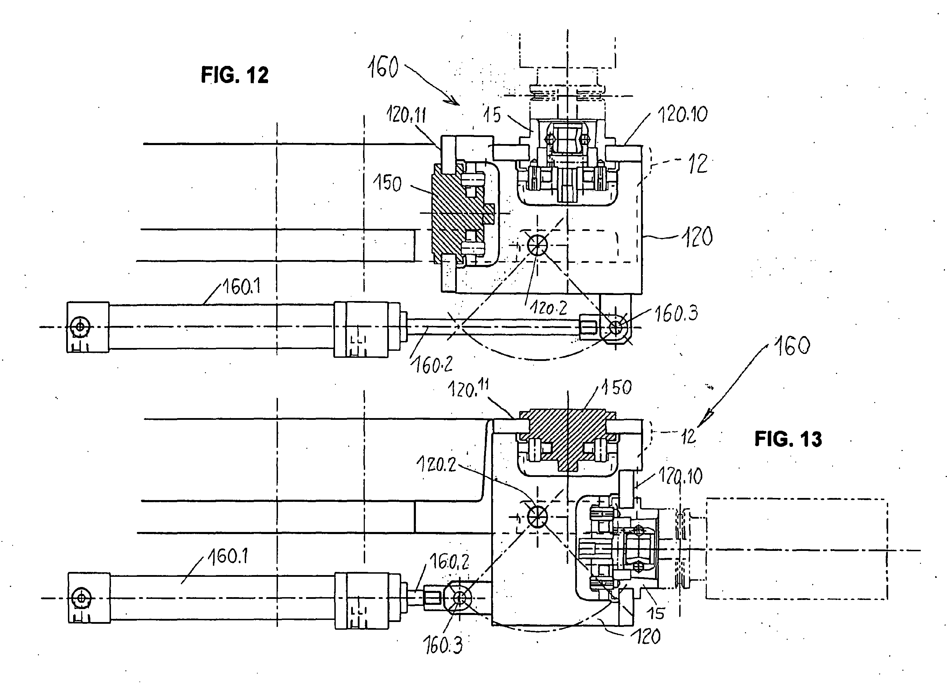

A corresponding track section is respectively formed onto said first and second faces 120.10, 120.11 of said parallelepiped body 120. Said track sections 120.10, 120.11, as said, have a width at least equal to the above-mentioned pitch "p" (width of a bush 15) and they correspond as to shape and arrangement to the remaining portion of the track 12. By means of such arrangement, when the stem of the actuator 160.1 is extended (figure 12), the first track section 120.10 is arranged flush with the remaining portion of the track 12, which then unwinds without solution of continuity also at said station 160.

On the contrary, when the stem of the actuator 160.1 is retracted (figure 13), the second track section 120.11 is arranged flush with the remaining portion of the track 12, which also in this case unwinds without solution of continuity also at said station 160.

It will be noted that, whereas said first track section 120.10 receives a tool-holding bush 15, the second track section 120.11, instead, receives a so-called "false bush" 150, which corresponds to a bush 15 with the difference that it does not have any axial cavity to house a tool therein.

In the usual operation, that is in the tool changing process with the management of "random" type, the tool change is performed in said station 160 by making use of the first track section 120.10 with related bush 15, which is swivelled from the horizontal position (figure 12, wherein the bush axis is vertical) to the vertical position (figure 13, wherein the bush axis is horizontal) and viceversa, by means of the actuator 160.1. For the explanation of such tool changing process, the description given by referring to figures 1 to 6 is referred to.

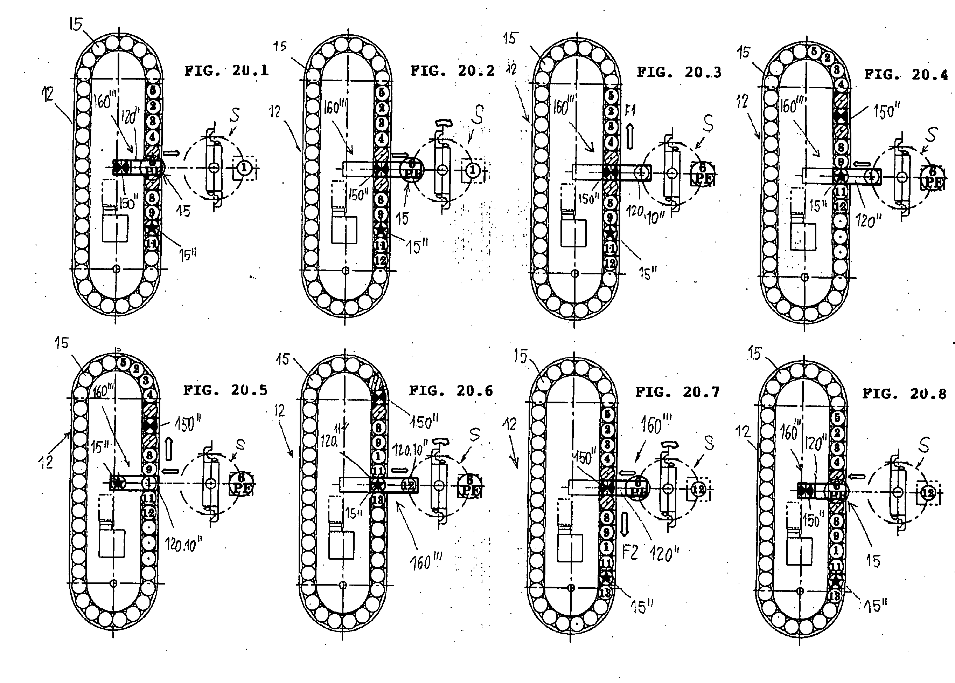

On the contrary, in order to change the tools having the overall dimensions larger than the pitch "p" of the warehouse, that is in the tool changing process with management of "fixed-place" type, in said station 160 the tool change is performed for example by using also the second track section 120.11 with related false bush 150, which is made to swivel from the vertical position (figure 12, wherein the axis of the false bush is horizontal) to the horizontal one (figure 13, wherein the axis of the false bush is vertical) and viceversa, by means of the actuator 160.1. For the explanation of said tool changing process, the description given hereinafter, in particular with reference to figures 20.1 to 20.8, is referred to.

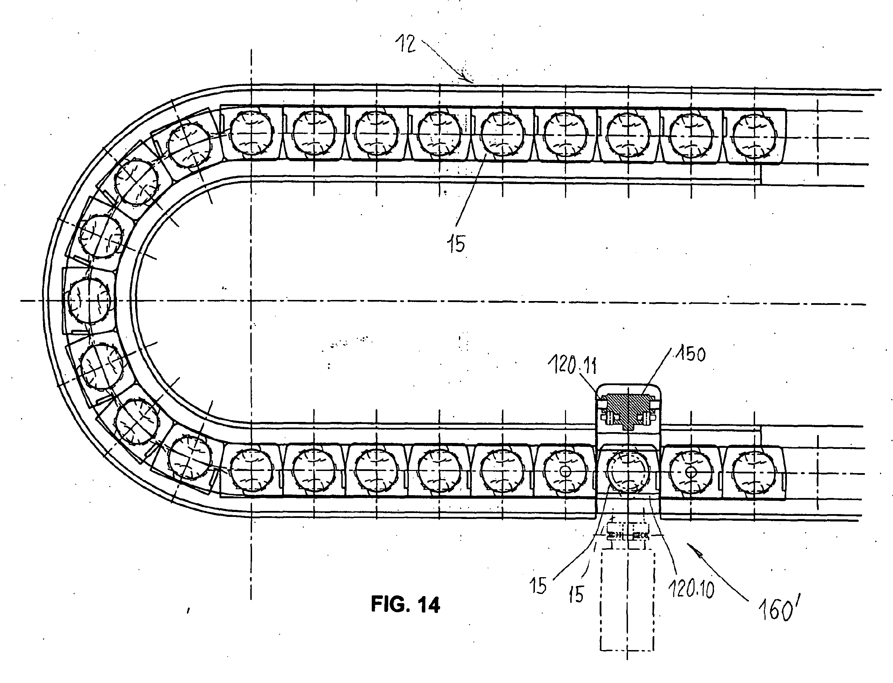

### Variant according to figure 14

The here illustrated change station 160' corresponds, as to structure and function, to the above-described station 160, with the only difference that it is arranged along a rectilinear part of the track 12. Therefore, the additional description is omitted.

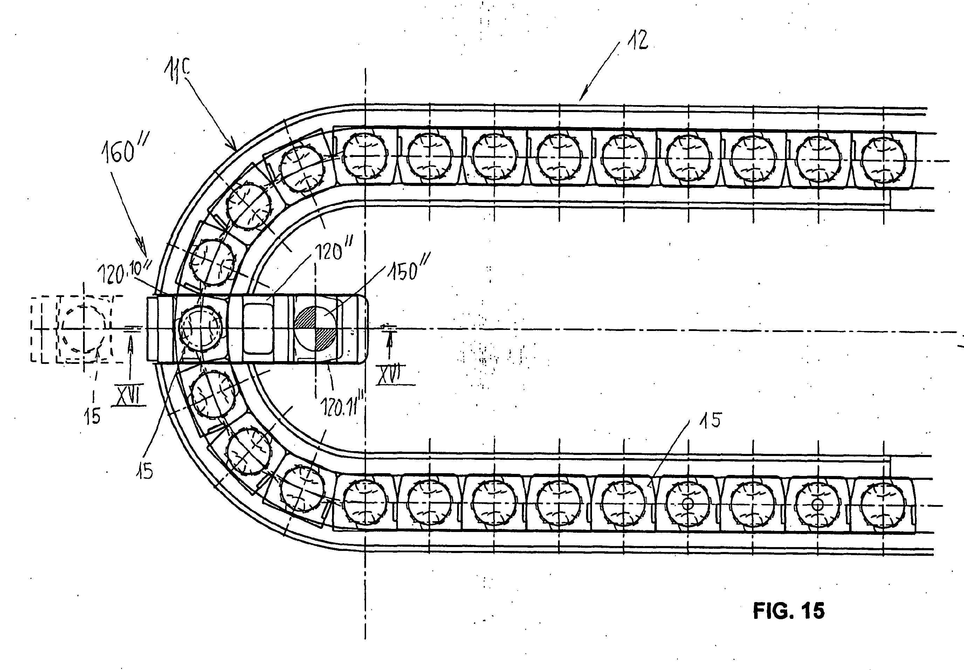

### Variant according to figures 15 to 18

The here described change station 160" comprises an exchanger (the body 120") with linear translation, with reciprocating motion, in direction transversal to the track and with a double place. It is suitable both for the so-called "random" management and for the "fixed-place" one of the tools of the warehouse according to the invention, as it will result hereinafter.

Said change station 160" is provided in the centre of the curve 11C of the track 12 opposed to the one occupied by the gear wheel 13. A fixed actuator 160.1" is arranged at said change station 160", which is constituted by an hydraulic or pneumatic cylinder, articulated to one end with respect to said base plate 11.1, the axis thereof is contained in the longitudinal vertical mid-plane of the track 12 and the stem thereof 160.2" is connected to the free end thereof with respect to a parallelepiped body 120", which occupied a part of the track 12 with a width at least corresponding to said pitch "p" and it is assembled sliding by translation in transversal direction with respect to the remaining portion of the track itself by means of said actuator 160.1", so as to arrange alternatively a first or a second one of two adjacent portions thereof (120.10", 120.11") at the track itself. Said parallelepiped body 120" is mounted sliding along a pair of rectilinear prysmatic guides 160.3", parallel therebetween and with respect to said mid-plane and extended at and inside the track 12, below said base plate 11.1 of the track itself. In said figures, a usual tool-holding bush is designated with 15, whereas a false bush is designated with 150", as described above.

It will be noted that said first and second adjacent portions 120.10", 120.11" of said parallelepiped body 120 are shaped each one like a respective track section 12. Said track sections 120.10", 120.11", as said, have width at least equal to the above-mentioned pitch "p" (width of a bush 15) and they correspond as to shape and arrangement to the remaining portion of the track 12, so that the track unwinds without solution of continuity also at said station 160", when one of said sections is brought in alignment with the track itself.

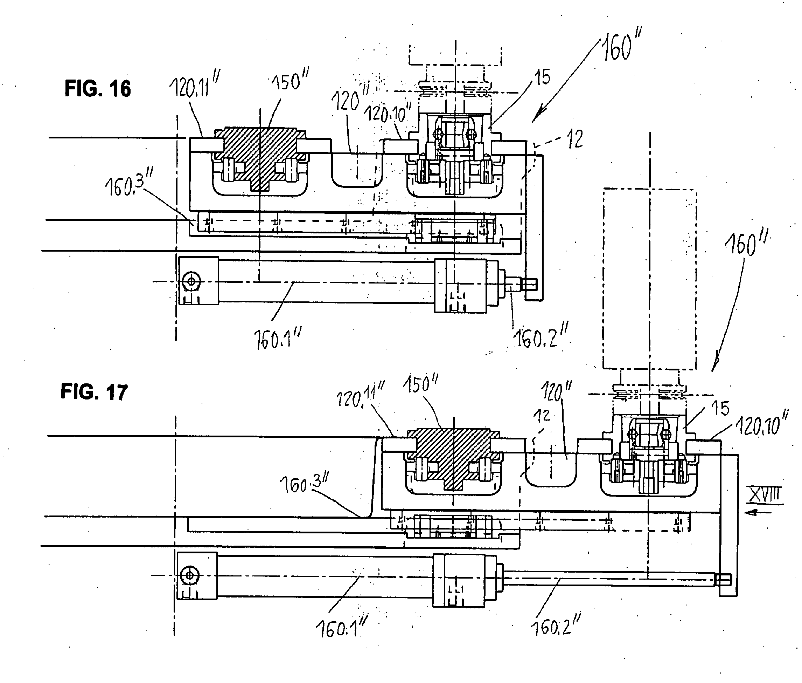

In particular, when the stem of the actuator 160.1" is retracted (figure 16), the first track section 120.10" is arranged in alignment with the remaining portion of the track 12, whereas when the stem of the actuator 160.1" is extended (figure 17), the second track section 120.11" is arranged in alignment with the remaining portion of the track 12.

### Operation of the present variant

In the usual operation, that is in the tool changing process with the management of "random" type, in said station 160" the tool change is performed by using the first track section 120.10" with related bush 15. For the explanation of such tool changing process, the description given with reference to figures 1 to 6 is referred to.

On the contrary, in order to change the tools having the overall dimensions larger than the pitch "p" of the warehouse, that is in the tool changing process with management of "fixed-place" type, in said station 160" the tool change is performed by using, for example, also the second track section 120.11" with related false bush 150". For the explanation of said tool changing process, the description given hereinafter, in particular with reference to figures 20.1 to 20.8, is referred to.

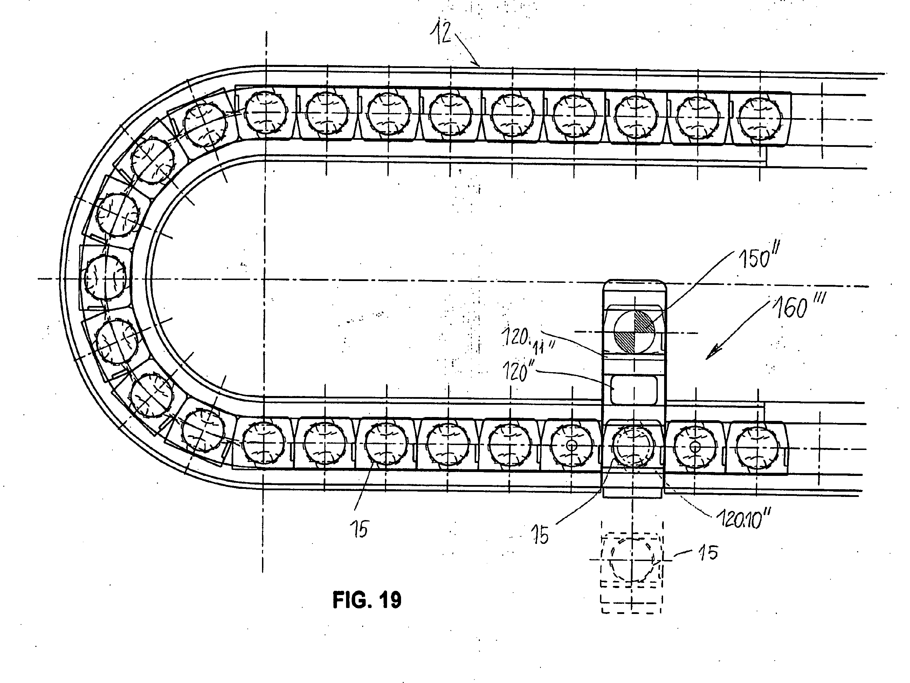

### Variant according to figure 19

The here illustrated change station 160"' corresponds, as to structure and function, to the station 160" described above, with the only difference that it is arranged along a rectilinear part of the track 12. The additional description is therefore omitted. The parts similar to those of said station 160" are designated with the same references.

The tool changing process in the tool warehouse with the station 160"' of figure 19 is now illustrated by referring to figures 20.1 to 20.8

### First step - figure 20.1

In the change station 160"' there are a false bush 150" (in the second track section 120.11") and (in the first track section 120. 10") a bush 15 holding a tool (designated with "6PF") having the overall dimensions (for example, diameter) larger than the pitch "p" of the warehouse. As it can be noted in said figure, in the track 12 the two places adjacent said bush 15 are free, owing to the dimensional surplus of the tool hold by bush itself. A tool "1" works onto the spindle of the machine.

### Step 2 - figure 20.2

In order to perform the exchange, the stem of the actuator 160.1" (figure 17) is extended, the second track section 120.11" is arranged in alignment with the remaining portion of the track 12, whereas the bush 15 with related tool is extracted linearly from the track 12 and approached to the exchanger S. Under this condition, the second track section 120.11" with the false bush 150" is aligned with respect to the track 12.

### Step 3 - figure 20.3

The exchanger S performs the exchange between the tool 1, picked-up from the spindle of the machine, and the tool "6PF", inserted onto the spindle of the machine, and it places said tool 1 onto the bush 15 which is in the first track section 120.10" extended with respect to the track 12.

### Step 4 - figure 20.4

By making the bushes in the track 12 to translate in the direction of the arrow F1 (figure 20.3), an empty bush 15" (designated with five-point star) is brought to occupy the second track section 120.11", whereas the false bush 150" and the two adjacent empty bushes are correspondingly translated along said track.

### Step 5 - figure 20.5

The stem of the actuator 160.1" is retracted, so that the first track section 120.10" with the bush holding the tool 1 is aligned with respect to the track 12.

### Fase 6 - figure 20.6

By making the bushes in the track 12 to translate, a bush 15 bearing the tool "12" is made to move forward by a given number of places as far as occupying the first track section 120.10" of the station 160"'; then, the stem of the actuator 160.1" is extended, so as to extend beyond the track itself said first section 120.10", which thus exhibits the tool "12" to the exchanger S for the exchange, whereas the second track section 120.11" with empty bush 15" occupies the track 12.

### Fase 7 - figure 20.7

By making the bushes in the track 12 to translate in the direction towards the arrow F2, opposed to F1, so as to move back by a number of places or bushes equal to the one covered before by the bush with the tool "12", the false bush 150" is again positioned in the second track section 120.11" of the station 160"', whereas the empty bush 15" now occupies the position which previously had the bush with the tool "12".

The exchanger S performs the exchange between the tool with large diameter "6PF" and the normalized tool "12". Such tool is inserted into the spindle of the machine, whereas the oversize tool "6PF" is inserted into the bush 15 occupying the first track section 120.10" extended beyond the track itself.

### Step 8 - figure 20.8

The stem of the actuator 160.1" is retracted so that the first track section 120.10" with the bush holding the oversize bush "6PF" is aligned with respect to the track 12, whereas the other track section with the false bush 150" has re-entered outside the track, in said station 160"'. The same arrangement of step 1 has been reproduced. In such arrangement, indeed, the bush 15 holding the tool with large dimension "6PF" is adjacent to two empty bushes 15.

It will be noted that in the tool change management with "random" mode, the false bush 150" is never utilized and therefore the change station 160"', although being with double places, operates like a single-place station (about this matter see the description given with reference to figures 1 to 10).

As it results from what precedes, the present invention makes possible the contemporaneous management of the tools in "random" mode, for the tools with diameter smaller than or equal to the warehouse pitch, and in "fixed-place" mode for the tools with larger dimensions, without being at disadvantage of the exchange time in any way.

A - slide or tilter - exchanger having two perfectly identical seats (120.10. 120.11, 120.10", 120.11") and holding in the first seat the bush with the tool to be exchanged and in the second seat a false bush (150, 150") identical to the first one, but without tool, operates in the change station (160, 160', 160", 160"').

In case of exchange of a tool with large sizes, when the extraction of the selected tool-holding bush is performed, or by means of linear transfer or with overturning by 90°, the false bush arranges in the place of the extracted bush, allowing the motion of the warehouse in the so-called "masked" time (that is whereas the tool machine continues to work), searching for the position with fixed place wherein the bulky tool will be discharged. In this way, the false bush always guarantees the motion continuity of the tool-holding bushes 15 along the track 12.

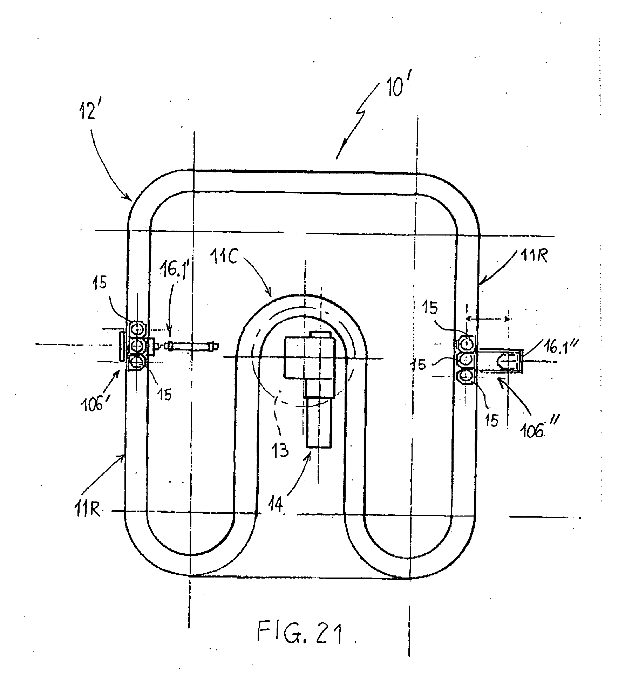

By now referring to figure 21, wherein the parts similar to the ones of the other figures are designated with the same reference numerals, a tool warehouse according to another embodiment of the invention is designated with 10'.

The warehouse 10' has a closed-ring-like track 12', shaped (seen in elevation) substantially like an upside-down U and having an inner loop with a semi-circular curve 11C. Said warehouse 10' comprises a gear wheel 13, mainly coplanar and coaxial with respect to said semi-circular curve 11C of the track 12', so that substantially half of the toothing thereof extends in said same curve. Electrically-operated geared motor means 14 controls selectively the rotation of said gear wheel 13. A plurality of identical tool-holding bushes 15 is juxtaposed in said track 12' two by two in mutual contact and to fill-in the track 12' itself, the whole according to an arrangement similar to what described by referring to the first embodiment (only some bushes 15 are represented in figure 21, for sake of illustration clarity). It will be noted that said track 12' comprises a first outlet station 106' arranged along a rectilinear part 11R of the track itself and wherein, by means of an actuator 16.1', the selective coming out of one of said bushes 15 at a time is controlled, by means of angular rotation outwardly together with a section of the track itself (as in the station 16 of the first embodiment). Besides, another outlet station, designated with 106", is provided in another rectilinear part 11R of the same track 12', wherein the selective coming out of one of said bushes 15 at a time is controlled by means of linear extraction towards the outside of the track itself. Obviously, also only one of said stations can be provided in the track 12'.

According to a not illustrated embodiment variant of the invention, but which can be immediately understood in the light of what described above, the gear wheel for dragging the tool-holding bushes is arranged at a rectilinear part of the track including the bushes themselves juxtaposed therebetween for the filling-in. Also by means of this arrangement, when said gear wheel is moved into rotation, a bush at a time is received in a corresponding cavity between adjacent teeth of the wheel itself, it remains therein while it is dragged to cover a rectilinear part of the track and it is then released downwards the wheel itself. After this, said bush is moved, together with all other bushes outside said gear wheel, along the remaining portion of said track due to the push by the other bushes which are gradually dragged by said wheel.

Besides, the gear wheel, if it is arranged in a curve of the track, can occupy a portion only of the corresponding curve in said track.

### Advantages of the invention

An advantage, already mentioned above, is the possibility provided by the invention of managing at the same time the tool exchange in "random" mode, for the tools with diameter smaller than or equal to the warehouse pitch, and in "fixed-place" mode, for the tools with larger dimensions, without being at disadvantage of the working time of the machine in any way.

As it results clear, the invention allows to achieve the objects illustrated in the premises in a simple and effective way.

## Claims

1. A tool warehouse in a numerical control machining centre and the like, including a track wherein a plurality of tool-holding bushes is dragged and:
- a gear wheel (13), mainly coplanar with respect to a portion (11C; 11R) of said track (12, 12'), so that a part of the toothing thereof extends in the track itself;
- electrically-operated geared motor means (14), which - when it is driven selectively - controls the rotation of said gear wheel (13);
- a plurality of tool-holding bushes (15), juxtaposed in said track (12, 12') two by two in mutual contact and to fill-in the track itself, each bush (15) heaving the axis substantially parallel to that of the gear wheel (13);
- at least a change station (16, 16', 16", 16'; 160, 160', 160", 160"; 106', 106") arranged in said track (12, 12') and thereat the selective coming out and re-introduction of one of said bushes (15) at a time is determined, so that when, by means of the geared motor (14), the gear wheel (13) is moved into rotation, a bush (15) at a time is received in a corresponding cavity (13.cl) of said wheel, it remains therein whereas it is dragged by the wheel itself along said track portion (11C, 11R), it is then released downwards the wheel (13) and together with all other bushes outer of said wheel (13) it is moved along the remaining portion of the track (12, 12') due to the push of the other bushes (15) which are gradually brought by said wheel (13) to move along said track portion (11C, 11R), so that the tool-holding bushes (15) are brought to move all of them simultaneously along said track, whereas the simultaneous motion of all bushes (15) stops, by halting said gear wheel (13), when the bush chosen for the tool change is at said change station (16, 16', 16", 16"; 160, 160', 160", 160"'; 106', 106"),
**characterized in that** said change station (150, 160', 160", 160"') comprises two places, wherein two bushes (15, 150, 150") at a time are respectively housed, both for the so-called "random" management of tools in the warehouse having the diameter smaller than or equal to the pitch (p) of the warehouse, and for the so-called "fixed-place" management of tools with larger overall dimensions.

2. The tool warehouse according to claim 1, **characterized in that** said change station (160, 160') comprises a swivelling exchanger (120).

3. The tool warehouse according to claim 2, **characterized in that** said change station (160, 160') comprises a fixed actuator (160.1, 160.2, 160.3) controlling the overturning of a body (120), mounted swivelling (pin 120.2) with respect to said track, so as to arrange alternatively, a first and a second one of two side faces thereof (120.10, 120.11) at the track itself, and **in that** a corresponding track section (120.10, 120.11) is respectively formed on said first and second faces of said body (120).

4. The tool warehouse according to claim 3, **characterized in that** said body (120) occupies a part of the track (12) with width at least corresponding to said pitch "p" of the warehouse and it is assembled swivelling (pin 120.2) with respect to the remaining portion of the track itself, so as to align alternatively a first or a second track section (120.10, 120.11) with respect to the track itself, substantially without solution of continuity.

5. The tool warehouse according to claim 1, **characterized in that** said change station (160", 160'") comprises an exchanger (120") with linear translation, with reciprocating motion, in direction transversal to the track.

6. The tool warehouse according to claim 5, **characterized in that** said change station (160", 160'") comprises a fixed actuator (160.1") which controls the alternative linear translation of a parallelepiped body (120"), mounted sliding (guides 160.3) in transversal direction with respect to said track, so as to arrange alternatively a first or a second one of two portions (120.10", 120. 11") of said body at the track itself, and **in that** a corresponding track section (120.10", 120.11") is respectively formed onto said first and second portions of said body (120").

7. The tool warehouse according to claim 6, **characterized in that** said body (120") occupies a part of the track (12) with width at least corresponding to said pitch "p" of the warehouse and it is mounted sliding (guides 160.3") by translation in transversal direction with respect to the remaining portion of the track so as to align alternatively a first or a second track section (120.10", 120.11") with respect to the track itself, substantially without solution of continuity.

8. The tool warehouse according to one of the preceding claims, wherein, substantially at the plane wherein said gear wheel (13) lies, each bush (15) supports a pair of rollers (15.2), opposed therebetween and assembled idle onto respective axes parallel to the one of the bush itself, and wherein said rollers (15. 2) partially come out from the body of the bush (15) and rest against opposed walls of the track (12, 12'), so as to facilitate the sliding of the bushes themselves, **characterized in that** said gear wheel (13) has a recess (13.1) at each cavity between pairs of adjacent teeth, in order to house therein the portion of one of said rollers (15.2) coming out from the outline of the bush (15) received in said cavity itself, whereas the other roller (15.2) rolls against the outer wall of the track (12, 12').

9. The tool warehouse according to one of the preceding claims, **characterized in that** detecting means (18) is provided along said track (12, 12'), whereas a tool-holding bush (15.0) is equipped with a member (18.1) apt to be detected by the detecting means (18), so as to define precisely a position "0" or a starting position of the set of bushes (15) slidingly housed in the track itself and to determine univocally the position of each bush (15).

10. A tool changing process in a tool warehouse according to one of claims 1 to 7 in a numerical control machining centre and the like, including a track wherein a plurality of toot-holding bushes is dragged, both for the so-called "random" management of tools with diameter smaller than or equal to the pitch "p" of the warehouse, and for the fixed-place" management of tools with larger overall dimensions, wherein , upon performing the operation for changing a tool (6PF) having at least a larger overall dimension than said pitch "p", one of two said bushes (15) holds said tool and it is extracted from said station and the other one of said bushes (150, 150") is arranged in the place of said extracted bush (15), by allowing the motion of the warehouse, whereas the tool machine continues to work, searching for the fixed--place position wherein the bulky tool will be discharged, so as to guarantee the motion continuity of the tool-holding bushes along the track (12, 12').

11. A process according to claim 10, **characterized in that** an inverse procedure is performed in order to bring back said bulky tool (6PF) inside said track (12, 12').

## Patentansprüche

1. Werkzeuglager in einem CNC-Bearbeitungszentrum und dergleichen, umfassend eine Führungsschiene, in der eine Mehrzahl von Werkzeughaltern gezogen wird und
- ein Zahnrad (13), im wesentlichen planparallel zu einem Teil (11C; 11R) der genannten Führungsschiene (12, 12'), so dass sich hiervon ein Teil der Verzahnung in der Führungsschiene selbst erstreckt;
- elektrisch betriebene Getriebemotorvorrichtung (14), die - wenn wahlweise angetrieben - die Drehung des genannten Zahnrades (13) kontrolliert;
- eine Mehrzahl von Werkzeughaltern (15), nebeneinander in genannter Führungsschiene (12, 12') angeordnet, jeweils zwei in gegenseitigem Kontakt und derart, dass die Führungsschiene ausgefüllt wird, wobei jeder Halter (15) eine im wesentlichen parallele Achse zur Achse des Zahnrades (13) hat;
- mindestens eine in genannter Führungsschiene (12, 12') angeordnete Wechselstation (16, 16', 16", 16"'; 160, 160', 160", 160"'; 106', 106"), wobei das wahlweise Heraustreten und Wiedereinführen von einem der genannten Werkzeughalter (15) jeweils bestimmt wird, so dass wenn durch den Getriebemotor (14) das Zahnrad (13) in Drehung gebracht wird, ein Werkzeughalter (15) jeweils in einem entsprechenden Hohlraum (13. c1) des genannten Rades empfangen wird, er darin bleibt, wobei er durch das Rad selbst entlang des genannten Führungsschienenabschnittes (11C, 11R) gezogen wird, dann abwärts des Rades (13) befreit wird und zusammen mit allen anderen außerhalb des Zahnrads befindlichen Werkzeughaltern entlang des restlichen Abschnitts der Führungsschiene (12, 12') bewegt wird infolge des Schubs der anderen Werkzeughalter (15), die allmählich zu genanntem Rad (13) gebracht werden, um sich entlang des genannten Führungsabschnittes (11C, 11R) zu bewegen, sodass die Werkzeughalter (15) dazu geführt werden, sich alle gleichzeitig entlang der genannten Führungsschiene zu bewegen, wobei die gleichzeitige Bewegung aller Werkzeughalter (15) durch Anhalten des genannten Zahnrades (13) gestoppt wird, wenn sich der für den Werkzeugwechsel gewählter Werkzeughalter an der genannten Wechselstation (16, 16', 16", 16"'; 160, 160', 160", 160"'; 106', 106") befindet,
**dadurch gekennzeichnet, dass** genannte Wechselstation (160, 160', 160", 160"') zwei Stellen umfasst, in denen jeweils zwei Werkzeughalter (15, 150, 150") gelagert sind für die sogenannte "wahllose" Verwaltung von Werkzeugen im Werkzeuglager mit einem kleineren oder gleich großen Durchmesser wie der Abstand (p) des Lagers bzw. für die sogenannte "feste" Verwaltung von Werkzeugen mit größeren Außenabmessungen.

2. Werkzeuglager nach Anspruch 1, **dadurch gekennzeichnet, dass** genannte Wechselstation (160, 160') einen schwenkbaren Wechsler (120) umfasst.

3. Werkzeuglager nach Anspruch 2, **dadurch gekennzeichnet, dass** genannte Wechselstation (160, 160') einen festen Antrieb (160.1, 160.2, 160.3) umfasst, der das Kippmoment eines schwenkbar (Abstand 120.2) zu genannter Führungsschiene angebrachten Gehäuses (120) kontrolliert, sodass wahlweise eine erste und eine zweite der beiden Seitenflächen hiervon (120.10, 120.11) an der Führungsschiene selbst angeordnet werden und dass ein entsprechender Führungsschienenabschnitt (120.10, 120.11) an genannten ersten bzw. zweiten Seitenflächen des genannten Gehäuses (120) ausgebildet wird.

4. Werkzeuglager nach Anspruch 3, **dadurch gekennzeichnet, dass** genanntes Gehäuse (120) einen Teil der Führungsschiene (12) mit einer mindestens dem genannten Abstand "p" des Werkzeuglagers entsprechenden Weite in Anspruch nimmt und dass es schwenkbar (Abstand 120.2) mit Bezug auf den restlichen Abschnitt der Führungsschiene selbst montiert ist, sodass wahlweise ein erster oder ein zweiter Abschnitt der Führungsschiene (120. 10, 120.11) mit Bezug zur Führungsschiene selbst im wesentlichen ohne Unterbrechung in eine Linie gebracht wird.

5. Werkzeuglager nach Anspruch 1, **dadurch gekennzeichnet, dass** genannte Wechselstation (160", 160' ") einen Werkzeugwechser (120") mit geradliniger Translation mit Hubbewegung in Schrägrichtung zur Führungsschiene umfasst.

6. Werkzeuglager nach Anspruch 5, **dadurch gekennzeichnet, dass** genannte Wechselstation (160", 160' ") einen festen Antrieb (160.1") umfasst, der die abwechselnde geradlinige Translation eines Parallelflach-Gehäuses (120") kontrolliert, das verschiebbar (Führungen 160.3) in Schrägrichtung mit Bezug auf genannte Führungsschiene angebracht ist, sodass wahlweise ein erster oder ein zweiter der beiden Abschnitte (120.10", 120.11") des genannten Gehäuses an der Führungsschiene selbst angeordnet werden und dass ein entsprechender Führungsschienenabschnitt (120.10", 120.11") auf genannten ersten bzw. zweiten Abschnitten des genannten Gehäuses (120") ausgebildet wird.

7. Werkzeuglager nach Anspruch 6, **dadurch gekennzeichnet, dass** genanntes Gehäuse (120") einen Teil der Führungsschiene (12) mit einer mindestens dem genannten Abstand "p" des Werkzeuglagers entsprechenden Weite in Anspruch nimmt und dass es verschiebbar (Führungen 160.3") durch Translation in Schrägrichtung mit Bezug auf den restlichen Abschnitt der Führungsschiene angebracht ist, sodass wahlweise ein erster oder ein zweiter Abschnitt der Führungsschiene (120.10", 120.11") mit Bezug zur Führungsschiene selbst im wesentlichen ohne Unterbrechung in eine Linie gebracht wird.

8. Werkzeuglager nach einem der vorstehenden Ansprüche, worin im wesentlichen an der Ebene, worin das genannte Zahnrad (13) liegt, jeder Werkzeughalter (15) ein Paar Laufrollen (15.2) trägt, dazwischen gegenüberliegend und frei montiert auf die jeweiligen Achsen parallel zu einem der Werkzeughalter selbst und worin die genannten Laufrollen (15.2) von genanntem Gehäuse des Werkzeughalters (15) teilweise vorspringen und an den gegenüberliegenden Seiten der Führungsschiene (12, 12') anliegen, sodass das Gleiten der Werkzeughalter selbst erleichtert wird, **dadurch gekennzeichnet dass** genanntes Zahnrad (13) eine Auskehlung (13.1) an jedem Hohlraum zwischen Paaren von angrenzenden Zähnen hat, um darin den Abschnitt einer der genannten Laufrollen (15.2), die vom Umfang des seinerseits in genanntem Hohlraum aufgenommen Werkzeughalter (15) vorspringen, unterzubringen, wobei der andere Roller (15.2) gegen die Außenseite der Führungsschiene (12, 12') rollt.

9. Werkzeuglager nach einem der vorstehenden Ansprüche, **dadurch gekennzeichnet, dass** eine Suchvorrichtung (18) entlang genannter Führungsschiene (12, 12') vorgesehen ist, wobei ein Werkzeughalter (15.0) mit einem Element (18.1) ausgerüstet ist, das geeignet ist, durch die Suchvorrichtung (18) erfasst zu werden, um eine Position "0" oder eine Startposition des in der Führungsschiene selbst verschiebbar eingesetzten Satzes der Werkzeughalter (15) präzise festzulegen und um die Position von jedem Werkzeughalter (15) eindeutig zu bestimmen.

10. Ein Verfahren für den Werkzeugwechsel in einem Werkzeuglager nach einem der Ansprüche 1 bis 7 in einem CNC-Bearbeitungszentrum und dergleichen, umfassend eine Führungsschiene, worin eine Mehrzahl von Werkzeughaltern gezogen wird, sowohl für die sogenannte "wahllose" Verwaltung von Werkzeugen mit einem kleineren oder gleich großen Durchmesser wie der Abstand (p) des Lagers als auch für die sogenannte "feste" Verwaltung von Werkzeugen mit größeren Außenabmessungen, worin beim Ausführen des Vorgangs des Wechsels eines Werkzeugs (6PF) mit einer Außenabmessung, die mindestens größer als der genannte Abstand "p" ist, einer der zwei genannten Werkzeughalter (15) genanntes Werkzeug festhält und dieses aus der genannten Station herausgenommen wird und der andere der genannten Werkzeughalter (150, 150") anstelle des herausgenommenen Werkzeughalters (15) durch Zulassung der Bewegung des Werkzeuglagers angeordnet wird, während die Werkzeugmaschine weiter arbeitet, die feste Position suchend, in der das sperrige Werkzeug dann entladet wird, sodass die ununterbrochene Bewegung der Werkzeughalter entlang der Führungsschiene (12, 12') sichergestellt ist.

11. Ein Verfahren nach Anspruch 10, **dadurch gekennzeichnet, dass** ein umgekehrtes Arbeitsverfahren durchgeführt wird, um das genannte sperrige Werkzeug (6PF) in das Innere der genannten Führungsschiene (12, 12') zurückzubringen.

## Revendications

1. Magasin d'outils dans un centre d'usinage à commande numérique et similaire, comprenant une piste dans laquelle plusieurs douilles portant des outils sont entraînées et :
- une roue dentée (13), principalement coplanaire par rapport à une portion (11C, 11R) de la dite piste (12, 12'), de sorte qu'une partie de sa denture s'étende dans la piste même ;
- un moyen avec motoréducteur (14), qui - quand il est actionné sélectivement - contrôle la rotation de la dite roue dentée (13) ;
- plusieurs douilles portant des outils (15), juxtaposées dans la dite piste (12, 12') deux par deux en contact et pour remplir la piste même, chaque douille (15) ayant l'axe substantiellement parallèle à celui de la roue dentée (13) ;
- au moins une station de changement (16, 16', 16", 16"' ; 160, 160', 160", 160"' ; 106', 106") arrangée dans la dite piste (12, 12') et sur celle-ci la sortie et la réintroduction d'une des dites douilles (15) à la fois sont sélectivement déterminées, de sorte que quand, au moyen du motoréducteur (14), la roue dentée (13) est mise en rotation, une douille (15) à la fois est reçue dans une cavité correspondante (13.c1) de la dite roue, elle y reste tout en étant entraînée par la roue le long de la dite portion de piste (11C, 11R), elle est ensuite libérée en aval de la roue (13) et avec toutes les autres douilles extérieures à la dite roue (13) elle est transportée le long de la portion restante de la piste (12, 12') par la poussée des autres douilles (15) qui sont graduellement amenées par la dite roue (13) à se déplacer le long de la dite portion de piste (11C, 11R), de sorte que les douilles portant les outils (15) sont amenées à se déplacer toutes simultanément le long de la dite piste, pendant que le mouvement simultané de toutes les douilles (15) est arrêté en arrêtant la dite roue dentée (13), quand la douille choisie pour le changement d'outil est placée devant la dite station de changement (16, 16', 16", 16"' ; 160, 160', 160", 160'" ; 106', 106"),
**caractérisé par le fait que** ladite station de changement (160, 160', 160", 160"') comprend deux places, où deux douilles (15, 150, 150") à la fois sont respectivement logées, soit dans le cas de la gestion appelée «random» des outils dans le magasin lesquels ont un diamètre inférieur ou égal au pas (p) du magasin, soit dans le cas de la gestion appelée «à place fixe» d'outils lesquels ont des dimensions extérieures supérieures.

2. Magasin d'outils selon la revendication 1, **caractérisé par le fait que** la dite station de changement (160, 160') comprend un échangeur pivotant (120).

3. Magasin d'outils selon la revendication 2, **caractérisé par le fait que** la dite station de changement (160, 160') comprend un actionneur fixe (160.1, 160.2, 160.3) contrôlant le renversement d'un corps (120), monté de manière pivotante (pivot 120.2) par rapport à la dite piste, afin d'arranger alternativement une première et une seconde de ses deux faces latérales (120.10, 120.11) en correspondance de la piste même, et **par le fait qu'**une section de piste correspondante (120.10, 120.11) est respectivement formée sur les dites première et seconde faces du dit corps (120).

4. Magasin d'outils selon la revendication 3, **caractérisé par le fait que** le dit corps (120) occupe une partie de la piste (12) ayant une largeur au moins correspondant au dit pas « p » du magasin et qu'il est monté de façon pivotante (pivot 120.2) par rapport à la portion restante de la piste même, afin d'aligner alternativement une première ou une seconde section de piste (120.10, 120.11) par rapport à la piste même, substantiellement sans solution de continuité.

5. Magasin d'outils selon la revendication 1, **caractérisé par le fait que** la dite station de changement (160", 160"') comprend un échangeur (120") à translation linéaire, avec mouvement alternatif, dans la direction transversale par rapport à la piste.

6. Magasin d'outils selon la revendication 5, **caractérisé par le fait que** la dite station de changement (160", 160"') comprend un actionneur fixe (160.1") qui contrôle la translation linéaire alternative d'un corps parallélépipède (120"), monté pour glisser (coulisseaux 160.3) dans la direction transversale par rapport à la dite piste, afin d'arranger alternativement une première ou une seconde de deux portions (120.10", 120.11 ") du dit corps en correspondance de la piste même, et **par le fait qu'**une section correspondante de la piste (120.10", 120.11 ") est respectivement formée sur les dites première et seconde portions du dit corps (120").

7. Magasin d'outils selon la revendication 6, **caractérisé par le fait que** le dit corps (120") occupe une partie de la piste (12), ayant une largeur correspondant au moins au dit pas « p » du magasin et est monté pour glisser (coulisseaux 160.3") par translation en direction transversale par rapport à la portion restante de la piste, afin d'aligner alternativement une première et une seconde section de piste (120.10", 120.11 ") par rapport à la piste même, substantiellement sans solution de continuité.

8. Magasin d'outils selon une des revendications qui précèdent, dans lequel, substantiellement en correspondance du plan où se trouve la dite roue dentée (13), chaque douille (15) porte une paire de roulettes (15.2), opposées entre eux et assemblées folles sur des respectifs axes parallèles à l'axe de ladite douille, et dans lequel les dites roulettes (15.2) sortent partiellement du corps de la douille (15) et reposent contre les parois opposés de la piste (12, 12'), afin de faciliter le glissement des douilles mêmes, **caractérisé par le fait que** la dite roue dentée (13) a une niche (13.1) en correspondance de chaque cavité entre paires de dents adjacentes, afin d'y loger la portion d'une des dites roulettes (15.2) sortant du contour de la douille (15) reçue dans la dite cavité, tandis que l'autre roulette (15.2) roule contre la paroi externe de la piste (12, 12').

9. Magasin d'outils selon une des revendications qui précèdent, **caractérisé par le fait que** des moyens de détection (18) sont pourvus le long de la dite piste (12, 12'), tandis que une douille porte outil (15.0) est équipée d'un membre (18.1) apte à être détecté par les dits moyens de détection (18), afin de définir précisément une position « 0 » ou une position de départ du jeu des douilles (15) logé pour glisser dans la piste même et pour déterminer de manière univoque la position de chaque douille (15).

10. Procédé de changement d'outils dans un magasin d'outils selon une des revendications de 1 à 7 dans un centre d'usinage à commande numérique et similaire, comprenant une piste dans laquelle plusieurs douilles porte outils sont entraînées, soit pour la gestion appelée «random» des outils ayant un diamètre inférieur ou égal au pas « p » du magasin, soit pour la gestion appelée à «place fixe» d'outils ayant des dimensions générales supérieures, dans lequel lors de l'opération de changement d'outil (6PF) ayant au moins une dimension totale supérieure au pas « p », une des dites deux douilles (15) porte le dit outil et elle est extraite de la dite station et l'autre des dites douilles (150, 150") est arrangée à la place de la dite douille retirée (15), en permettant le mouvement du magasin, tandis que la machine outil continue à travailler, cherchant l'emplacement à place fixe dans lequel l'outil encombrant sera déchargé, afin de garantir la continuité du mouvement des douilles porte outils le long de la piste (12, 12').

11. Procédé selon la revendication 10, **caractérisé par le fait qu'**une procédure inverse est effectuée pour ramener le dit outil encombrant (6PF) dans la dite piste (12, 12').
